# DEMANDE DE BREVET EUROPEEN

(11) **EP 1 419 852 A1**
(43) Date de publication de la demande: **19.05.2004**
(21) Numéro de dépôt: 02079754.4
(22) Date de dépôt: 12.11.2002
(51) Int. Cl.: B24B 3/00, B24B 3/24, B24B 41/04, B24B 41/06, B23Q 1/70, B23Q 3/18, B23Q 1/38

(54) **Unité de broche**

(71) Demandeur: Rollomatic S.A., CH-2525 Le Landeron (CH)
(72) Inventeur: Rollier, Michel, 2525 Le landeron (CH)
(74) Mandataire: Ravenel, Thierry Gérard Louis

(57) **Abrégé**

L'invention concerne une unité de broche (1) comprenant un bâti (2), un arbre (4) muni à une de ses extrémités de moyens de serrage (14) pour serrer une pièce à usiner (16), ledit arbre (4) étant monté à rotation dans ledit bâti (2) et supporté radialement par l'intermédiaire de premier et deuxième paliers radiaux (6,8), ledit arbre (4) étant entraîné à rotation par des moyens moteurs, ladite unité (1) comprenant en outre un troisième palier (18) disposé au-delà desdits moyens de serrage (14) at apte à guider ladite pièce à usiner (16), caractérisée en ce que les premier et deuxième paliers radiaux (6,8) sont des paliers hydrostatiques et en ce que le deuxième palier radial (8), situé du côté du troisième palier (18), est agencé pour permettre audit arbre (4), dans la région dudit deuxième palier (8), un mouvement radial limité dans un plan perpendiculaire à l'axe de rotation de l'arbre (4), l'amplitude maximale dudit mouvement radial étant supérieure à celle de tout mouvement radial de l'arbre de l'arbre (4) pouvant être permis par ledit premier palier radial (6).

## Description

La présente invention concerne généralement le domaine des machines-outils et plus particulièrement une unité de broche comportant un palier de guidage rigide d'une pièce à usiner, utilisée notamment pour le meulage de d'outils de coupe tels que des forets, fraises ou analogues.

Les unités de broche équipant les machines-outils comprennent généralement un arbre équipé à une de ses extrémités d'une pince ou de mors destinés à serrer une pièce à usiner. L'arbre est monté à rotation dans un bâti par l'intermédiaire de deux paires de paliers à roulements permettant de supporter respectivement les efforts axiaux et radiaux appliqués à l'arbre au cours de l'usinage de ladite pièce. Un des problèmes le plus souvent rencontrés lors de l'utilisation de ces unités de broche réside dans la difficulté à maîtriser la concentricité de la pièce à usiner serrée dans la pince par rapport à l'axe de rotation de l'arbre, ce qui provoque notamment un mouvement orbital de la pièce à usiner autour dudit axe de rotation. Cette difficulté s'explique notamment par les défauts inhérents de concentricité du trou de la pince par rapport à l'axe de rotation de la broche. L'utilisation de systèmes de serrage telles des pinces, à précision élevée, dont les défauts de concentricité sont compris dans une gamme de 3 à 5 micromètres, permet de résoudre le problème lorsque les tolérances des pièces à réaliser sont du même ordre. Il se pose toutefois un problème lorsque la précision dimensionnelle des pièces à réaliser est inférieure à la gamme précitée.

Pour pallier l'effet néfaste de ce mouvement orbital sur l'usinage, il a été proposé d'utiliser un palier de guidage rigide supplémentaire supportant la pièce à usiner et disposé au-delà de la pince à une distance déterminée de celle-ci. Ce palier comprend typiquement une pièce en V associée à un doigt de serrage qui maintient la pièce à usiner au fond du V et limite ainsi considérablement le mouvement orbital de la pièce à usiner dans la partie en porte-à-faux de cette dernière. Toutefois, comme le palier supplémentaire empêche le mouvement orbital près de l'extrémité libre de la pièce à usiner, la pince et/ou la partie de la pièce à usiner située dans la zone comprise entre la pince et le palier supplémentaire doivent présenter une certaine flexibilité pour autoriser ce mouvement dans cette zone. Cette solution ne peut être donc être envisagée que pour des pièces à usiner de faibles dimensions, typiquement de l'ordre de 3 mm de diamètre, avec lesquelles une telle déformation peut être reprise par les pièces.

Pour les pièces présentant des dimensions plus grandes, on a proposé des pinces flexibles permettant d'absorber ledit mouvement orbital. Ce type de pince présente toutefois l'inconvénient de nécessiter un mécanisme complexe, d'être peu fiable et d'un prix élevé. De plus, la qualité d'usinage que l'on obtient en termes de concentricité est difficilement reproductible.

La présente invention a donc pour but principal de remédier aux inconvénients de l'art antérieur susmentionné en proposant une unité de broche qui soit simple et qui permette un usinage de pièces à usiner de dimensions quelconques avec un défaut de concentricité minimal.

L'invention a également pour but de fournir une telle unité de broche en permettant d'adapter aisément ses conditions de fonctionnement aux dimensions et tolérances des pièces à usiner.

L'invention a également pour but de fournir une telle unité de broche qui présente un faible coût de fabrication.

A cet effet, l'invention a pour objet une unité de broche comprenant un bâti, un arbre muni à une de ses extrémités de moyens de serrage pour serrer une pièce à usiner, ledit arbre étant monté à rotation dans ledit bâti et supporté radialement par l'intermédiaire de premier et deuxième paliers radiaux, ledit arbre étant entraîné à rotation par des moyens moteurs, ladite unité comprenant en outre un troisième palier disposé au-delà desdits moyens de serrage et apte à guider ladite pièce à usiner, caractérisée en ce que les premier et deuxième paliers radiaux sont des paliers hydrostatiques et en ce que le deuxième palier radial situé du côté du troisième palier, est agencé pour permettre audit arbre, dans la région dudit deuxième palier, un mouvement radial limité dans un plan perpendiculaire à l'axe de rotation de l'arbre, l'amplitude maximale dudit mouvement radial étant supérieure à celle de tout mouvement radial de l'arbre pouvant être permis par ledit premier palier radial.

Un des avantages de cette unité de broche réside dans la simplicité des moyens mis en oeuvre pour réaliser des usinages avec des défauts de concentricité minimaux. En effet on peut utiliser des systèmes de paliers hydrostatiques dans lesquels il suffit d'ajuster de façon appropriée les pressions pour autoriser le mouvement radial limité désiré dans le plan perpendiculaire à l'axe de rotation de l'arbre au niveau du deuxième palier.

Selon un mode de réalisation préféré de l'invention, l'amplitude dudit mouvement radial au niveau du premier palier est sensiblement nulle et l'amplitude dudit mouvement radial au niveau du deuxième palier est au maximum de l'ordre de ± 0.03 mm autour de la position médiane et de préférence de l'ordre de ± 0,01 mm.

D'autres caractéristiques et avantages de la présente invention apparaîtront dans la description suivante d'un mode de réalisation préféré de l'unité de broche selon l'invention, présentée à titre d'exemple non limitatif en référence aux dessins annexés, dans lesquels :
- La figure 1 est une coupe partielle d'un mode de réalisation d'une unité de broche selon l'invention;
- la figure 2 est une vue en bout de l'unité de broche selon l'invention, et

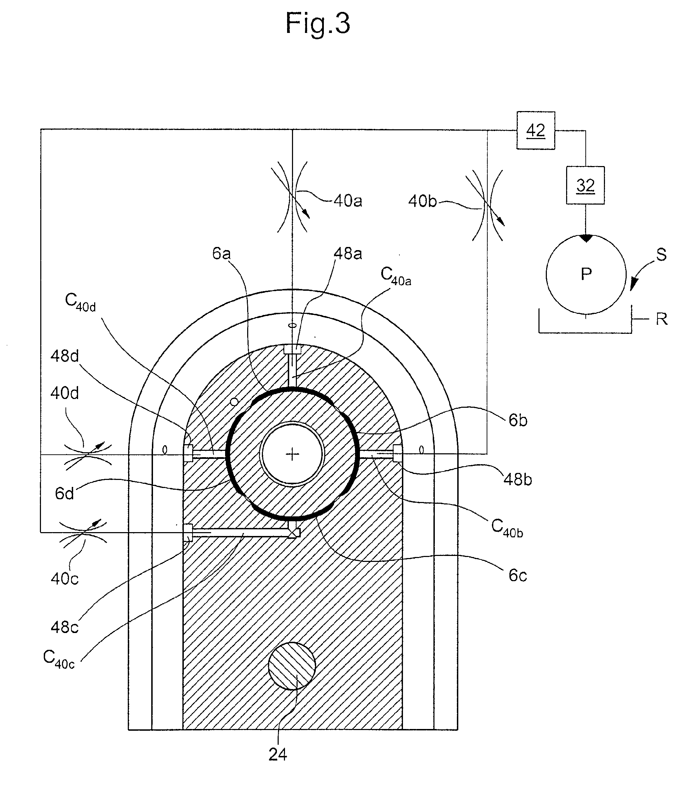

- la figure 3 est une coupe partielle selon la ligne III-III de la figure 1.

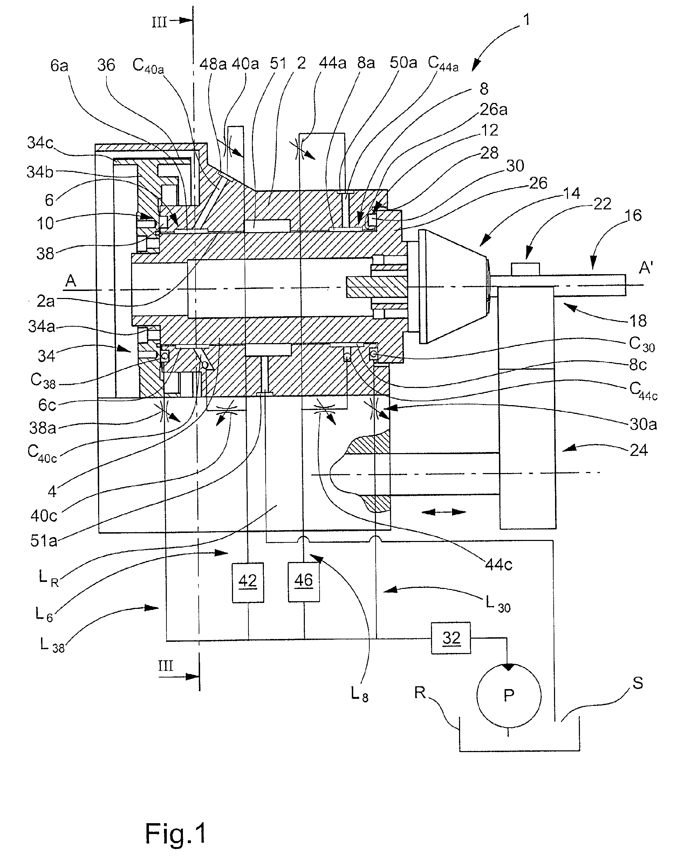

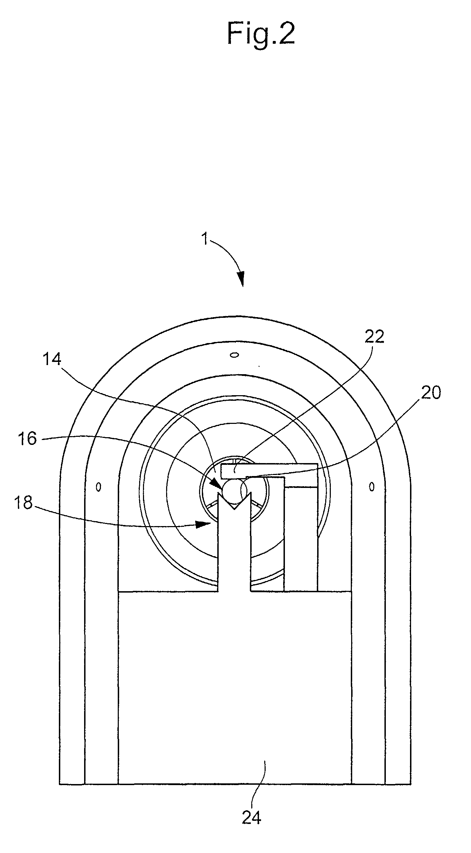

On voit aux figures 1 et 2 une unité de broche selon l'invention, désignée par la référence numérique générale 1. L'unité de broche 1 comprend un bâti 2 comprenant un alésage 2a dans lequel est monté à rotation un arbre 4 par l'intermédiaire de quatre paliers 6, 8, 10 et 12. L'arbre 4 est supporté radialement par deux paliers radiaux 6, 8 et est supporté axialement par deux paliers axiaux 10,12. Les paliers radiaux et axiaux 6, 8, 10, 12 sont des paliers hydrostatiques bien connus des hommes du métier, bien que dans selon une variante de réalisation de l'invention les paliers axiaux puissent être des paliers du type à roulement à billes, les paliers radiaux restant quant à eux des paliers hydrostatiques

L'arbre 4 comprend à une première extrémité, dite extrémité avant, des moyens de serrage 14 pour serrer une pièce à usiner 16. Les moyens de serrage comprennent typiquement une pince de serrage ou un mandrin de serrage classique à commande manuelle, hydraulique ou à air comprimé.

L'unité de broche 1 comprend en outre un palier supplémentaire 18 disposé au-delà des moyens de serrage 14 et apte à guider sans jeu la pièce à usiner 16. Typiquement le palier 18 comprend une gorge 20 en forme de V, le fond de la gorge s'étendant parallèlement à l'axe de rotation de l'arbre 4. La pièce à usiner 16 repose ainsi sur les flancs intérieurs de la gorge 20. En outre, la gorge 20 est associée à un doigt 22 qui applique une pression sur la pièce à usiner 16 afin de la maintenir contre lesdits flancs et ainsi assure un guidage sans jeu de la pièce 16. Dans l'exemple illustré, le palier 18 est solidaire d'un support 24 qui peut coulisser dans le bâti 2 de l'unité de broche 1, le long d'une direction parallèle à l'axe de rotation A-A' de l'arbre 4.

A la figure 1, on voit que l'extrémité avant de l'arbre 4 comporte un épaulement 26 ayant une face arrière 26a. L'épaulement 26 permet à l'arbre 4 de s'appuyer, par l'intermédiaire la face arrière 26a, dans un dégagement 28 ménagé dans la partie avant du bâti 2. Le fond du dégagement comprend une rainure annulaire 30 en communication avec une source de fluide S par l'intermédiaire d'une ligne L₃₀ comprenant un limiteur de débit 30a et un limiteur de pression 32. A cet effet, un canal C₃₀ relie la rainure 30 à un orifice (non représenté) ménagé à la surface extérieure du bâti et relié au limiteur de débit 30a. La rainure annulaire 30 forme ainsi avec la face arrière 26a de l'épaulement 26 le palier hydrostatique axial 12. Typiquement la source de fluide comprend un réservoir R associé à une pompe P qui alimente le limiteur de pression 32.

L'arbre 4 comporte à son extrémité opposée, dite extrémité arrière, une poulie 34 comportant un moyeu 34a, un flasque 34b et une surface périphérique 34c. Le moyeu 34a de la poulie est monté solidaire en rotation sur l'extrémité arrière de l'arbre 4. La surface périphérique 34c coopère avec une courroie d'entraînement 36 reliée à des moyens moteurs (non représentés) pour l'entraînement en rotation de l'arbre 4. En outre, la partie arrière du bâti 2 comprend une rainure annulaire 38 également en communication avec la source de fluide S par l'intermédiaire d'une ligne L₃₈ comprenant un limiteur de débit 38a et le limiteur de pression 32. A cet effet, un canal C₃₈ relie la rainure 38 à un orifice (non représenté) ménagé à la surface extérieure du bâti et relié au limiteur de débit 38a. Une face du flasque 34b de la poulie 34 s'appuie en regard de la rainure 38 pour former le palier hydrostatique axial 10.

Nous allons maintenant décrire la structure des paliers radiaux 6 et 8 en liaison avec les figures 1 et 2. Comme les paliers radiaux 6 et 8 présentent une structure sensiblement identique, seul le palier 6 a été représenté en coupe à la figure 2. Ainsi, les références numériques associées respectivement aux lettres a, b, c et d désignent ci-après des éléments ayant une structure et une fonction sensiblement identiques, même s'ils n'apparaissent pas sur les figures, les références 8a à 8d correspondent donc aux références 6a à 6d.

En se référant notamment aux figures 1 et 2 on voit que les paliers 6 et 8 comprennent chacun quatre chambres 6a, 6b, 6c, 6d, 8a, 8b, 8c et 8d ménagées dans l'alésage 2a. Dans chaque palier, les chambres 6a-6d et 8a-8d sont décalées les unes par rapport aux autres de 90° autour de l'axe de rotation de l'arbre 4. Les chambres 6a-6d du palier 6 sont chacune en communication avec la source de fluide S par l'intermédiaire d'une ligne L₆ comprenant un limiteur de débit associé 40a, 40b, 40c et 40d, un limiteur de pression 42 et le limiteur de pression 32. Il en va de même pour les chambres 8a-8d du palier 8 qui sont chacune en communication avec la source de fluide S par l'intermédiaire d'une ligne L₈ comprenant un limiteur de débit associé 44a, 44b, 44c et 44d, un limiteur de pression 46 et le limiteur de pression 32. Des canaux C_{40a-d} et C_{44a-d} ménagés dans le corps du bâti 2 relient respectivement les chambres 6a-d et 8a-d à des orifices 48a-d et 50a-d ménagés à la surface extérieure du bâti et reliés respectivement aux limiteurs de débit 40a-d et 44a-d.

Comme cela est visible de la figure 1, le bâti 2 comprend en outre une chambre de collecte 51 ménagée dans l'alésage 2a relié à la source de fluide par l'intermédiaire d'une ligne de retour L_{R}. A cet effet, un canal C_{R} relie la chambre 51 à un orifice 51a ménagé à la surface extérieure du bâti et relié via la ligne de retour au réservoir R de la source de fluide F.

Les lignes L6, L8, L30, L38 sont branchées en parallèle sur la pompe P et forment avec la ligne L_{R} un circuit hydraulique fermé qui alimente les quatre paliers hydrostatiques 6, 8, 10 et 12 avec des pressions et des débits qui peuvent être ajustés séparément pour chacun des paliers.

Les paliers axiaux 10 et12 sont alimentés classiquement en fluide à une pression P_{A} déterminée par le limiteur de pression 32 et les limiteurs de débit 30a et 38a respectivement, la pression et les débits étant choisis de manière à obtenir une rigidité axiale élevée des paliers 10 et 12. En revanche, les paliers radiaux 6 et 8 sont alimentés avec des pressions P_{R6} et P_{R8} très différentes. En effet, les pressions P_{R6} et P_{R8} en sortie des limiteurs de pression respectifs 42 et 46 et les débits en sortie des limiteurs de débit 40a-d et 44a-d sont agencés pour que le palier radial 8 permette à l'arbre 4 un mouvement radial limité dans un plan perpendiculaire à l'axe de rotation A-A', l'amplitude de ce mouvement radial étant supérieure à celle du mouvement radial de l'arbre 4 permis par le palier radial 6. De préférence, la pression P_{R6} et les débits en sortie des limiteurs de débit respectifs 40a-d sont ajustés pour que l'amplitude du mouvement radial de l'arbre 4 au niveau de palier radial 6 est sensiblement nulle. D'autre part, la pression P_{R8} et les débit en sortie des limiteurs de débit 44a-d respectivement sont ajustés pour que l'amplitude du mouvement radial de l'arbre 4 au niveau du palier radial 8 oscille au maximum entre ± 0,03 mm autour d'une position médiane, et de préférence entre ± 0,01 mm.

Pour fixer les idées, par amplitude sensiblement nulle on entend une amplitude de quelques micromètres. A cet effet, la pression P₆ présente dans le palier radial 6 est supérieure à la pression P₈ présente dans le palier radial 8. Typiquement, le rapport des pressions P₆/ P₈ varie entre 1 et 20 et sera de préférence le plus grand possible. A titre d'exemple, une pression P₆ de 50 bars et une pression P₈ de 5 bars ont donné des résultats satisfaisants.

On s'aperçoit que l'on peut donner au montage classiquement rigide de l'arbre 4 dans le bâti 2 une certaine flexibilité en permettant un mouvement d'amplitude limitée dans la zone du palier radial 8, c'est-à-dire dans la zone du palier radial non rigide. Dans un montage à rotation à trois paliers radiaux, à savoir deux paliers d'extrémité 6, 18 et un palier intermédiaire 8, comme cela est représenté à la figure 1, le guidage non rigide ou flottant au niveau du palier intermédiaire 8 sert à réduire, voire éliminer, l'effet d'un éventuel défaut de concentricité entre l'axe de rotation de l'arbre, l'axe des moyens de serrage et l'axe de la pièce à usiner dans la mesure où un certain mouvement dans le plan perpendiculaire à l'axe de rotation de l'arbre est autorisé, étant entendu qu'aucun mouvement dans ce plan n'est autorisé par les paliers radiaux d'extrémité qui sont maintenus rigides.

On comprendra que diverses modifications et/ou améliorations évidentes pour l'homme de métier peuvent être apportées au mode de réalisation décrit dans la présente description sans sortir du cadre de la présente invention définie par les revendications annexées. On pourra notamment prévoir d'utiliser des paliers à air à la place des paliers hydrostatiques.

## Revendications

1. Unité de broche comprenant un bâti, un arbre muni à une de ses extrémités de moyens de serrage pour serrer une pièce à usiner, ledit arbre étant monté à rotation dans ledit bâti et supporté radialement par l'intermédiaire de premier et deuxième paliers radiaux, ledit arbre étant entraîné à rotation par des moyens moteurs, ladite unité comprenant en outre un troisième palier disposé au-delà desdits moyens de serrage et apte à guider ladite pièce à usiner, **caractérisée en ce que** les premier et deuxième paliers radiaux sont des paliers hydrostatiques et **en ce que** le deuxième palier radial, situé du côté du troisième palier, est agencé pour permettre audit arbre, dans la région dudit deuxième palier, un mouvement radial limité dans un plan perpendiculaire à l'axe de rotation de l'arbre, l'amplitude maximale dudit mouvement radial étant supérieure à celle de tout mouvement radial de l'arbre pouvant être permis par ledit premier palier radial.

2. Unité de broche selon la revendication 1, **caractérisée en ce que** l'amplitude dudit mouvement radial au niveau du premier palier est sensiblement nulle et en ce l'amplitude dudit mouvement radial au niveau du deuxième palier est au maximum de l'ordre de ± 0.03 mm autour de la position médiane et de préférence de l'ordre de ± 0,01 mm .

3. Unité de broche selon la revendication 1 ou 2, **caractérisée en ce que** les premier et deuxième paliers radiaux sont sensiblement identiques et **en ce que** la pression de fluide présente dans le premier palier radial est supérieure à celle présente dans le deuxième palier radial.

4. Unité de broche selon la revendication 1 ou 2, **caractérisée en ce que** ledit arbre est également supporté axialement par une paire de paliers hydrostatiques.

5. Unité de broche selon l'une quelconque des revendications précédentes, **caractérisée en ce que** les premier et deuxième paliers radiaux comprennent respectivement des premières et deuxièmes chambres de pression reliées respectivement à un circuit d'alimentation de fluide et **en ce que** le circuit d'alimentation de fluide comprend des moyens d'ajustement de la pression dans lesdites première et deuxièmes chambres respectivement.

6. Unité de broche selon l'une quelconque des revendications précédentes, **caractérisée en ce que** le troisième palier assure un guidage sans jeu de la pièce à usiner.
